# EUROPEAN PATENT SPECIFICATION

(11) **EP 2 072 424 B1**
(45) Date of publication and mention of the grant of the patent: **30.06.2010**
(21) Application number: 07425821.1
(22) Date of filing: 21.12.2007
(51) Int. Cl.: B65G 25/06

(54) **Moving floor for supporting and conveying loads**
Hin- und hergehender Flurförderer zum Tragen und Fördern von Lasten
Convoyeur de sol à mouvement alternatif pour supporter et transporter des charges

(43) Date of publication of application: 24.06.2009
(73) Proprietor: Officine Meccaniche Bovesane S.r.l., 12012 Boves (Cuneo) (IT)
(72) Inventor: Cavallo, Luciano, 12012 Boves (Cuneo) (IT)
(74) Representative: Marchitelli, Mauro

(56) References cited:
- FR-A- 2 727 947
- US-A- 5 355 994

## Description

The present invention relates to a moving floor for supporting and conveying loads, according to the preamble of Claim 1.

A moving floor of this sort is known, for example, from the document No. EP-A-1698574. This document describes a moving floor for supporting and conveying loads, comprising two or more sets of slats, which move with alternating motion in their longitudinal direction.

Moving floors of this type are used, for example, as platforms of trailers and are frequently used for the movement of bulk materials of various size. One of the problems that is encountered in the use of moving floors of this type is represented by the fact that the material conveyed tends to penetrate into the longitudinal spaces existing between the adjacent slats in relative motion. Particularly critical working conditions arise in the case where the loading floor is used for conveying refuse or bulk granular material, such as, for example, soil, sand, salt, etc. In these cases, the material that penetrates into the spaces between the adjacent slats tends to jam the slats and prevent proper operation of the moving floor.

To overcome this drawback, it has already been proposed to use a band that covers the resting surface of the moving floor and is wound around entraining rollers arranged at the ends of the moving floor (see, for example, FR-2727947). This solution is not, however, satisfactory because the band can get pinched in the spaces between the adjacent slats and is thus exposed to risks of tearing and rapid wear.

The object of the present invention is to provide an improved loading floor that will enable the aforesaid drawbacks to be overcome.

According to the present invention, said object is achieved by a loading floor having the characteristics forming the subject of Claim 1.

The characteristics and advantages of the present invention will emerge clearly from the ensuing detailed description, which is provided purely by way of nonlimiting example, with reference to the annexed drawings, in which:
- Figure 1 is a schematic perspective view of a moving floor according to the present invention;
- Figure 2 is an exploded perspective view of the moving floor of Figure 1;
- Figure 3 is a perspective view at a larger scale and partially sectioned of the part indicated by the arrow III in Figure 1;
- Figure 4 is a partial cross section according to the arrow IV-IV of Figure 3;
- Figure 5 is an exploded cross section corresponding to that of Figure 4; and
- Figures 6 and 7 are partial and schematic cross sections according to the lines VI-VI and VII-VII of Figure 3.

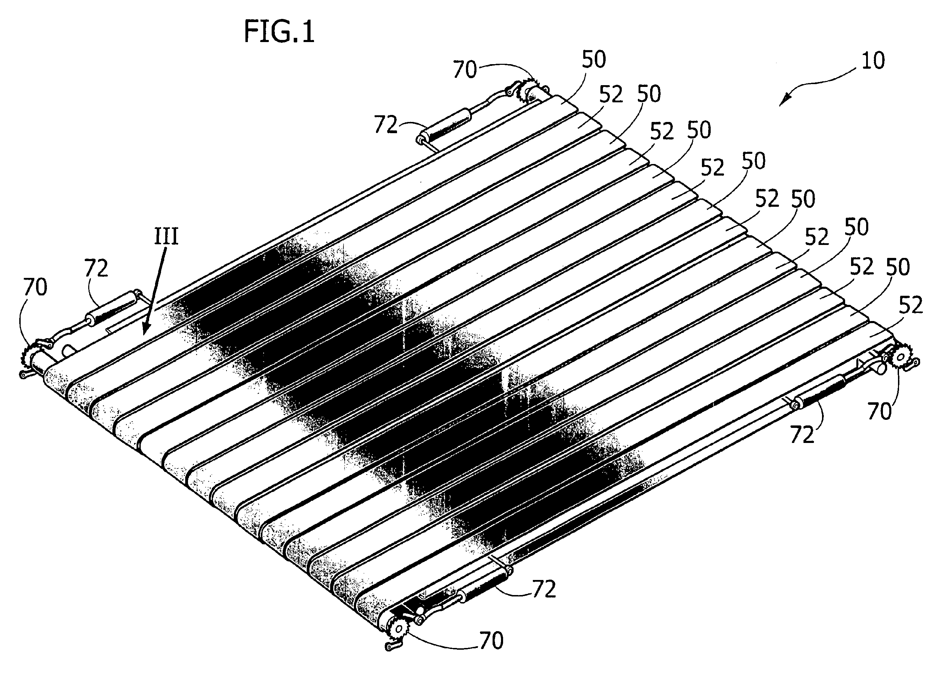

With reference to Figure 1, the number 10 designates a moving floor for supporting and conveying loads according to the present invention. The moving floor 10 has a resting floor that substantially is in the form of a continuous band made up of a plurality of longitudinal contiguous strips.

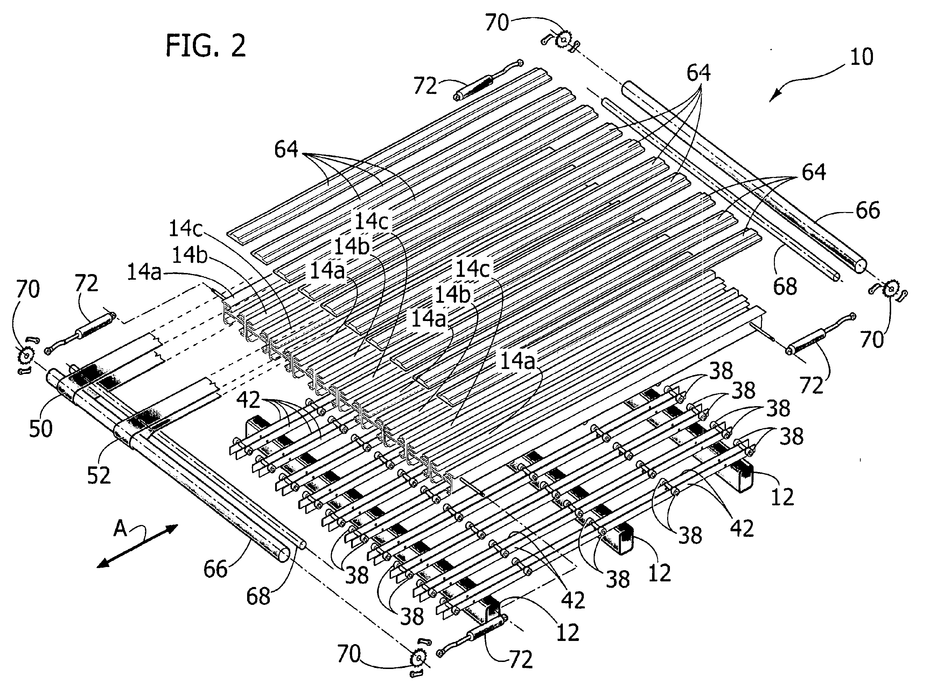

With reference to Figure 2, the moving floor 10 comprises a stationary supporting structure including a plurality of tubular cross-members 12. The moving floor 10 comprises a plurality of longitudinal slats 14a, 14b, 14c, set parallel to one another. The slats 14a, 14b, 14c are mobile in the longitudinal direction indicated by the double-headed arrow A. The slats 14a, 14b, 14c are divided into three sets, distinguished by the letters a, b, c, each set being formed by slats designated by the same reference numbers. Each slat 14a, 14b, 14c is set between two adjacent slats belonging to different sets, with the exception of the two end slats, which on their outer side are adjacent to a fixed element of the frame (not illustrated). The slats of each set are fixed to one another and move together in the direction A.

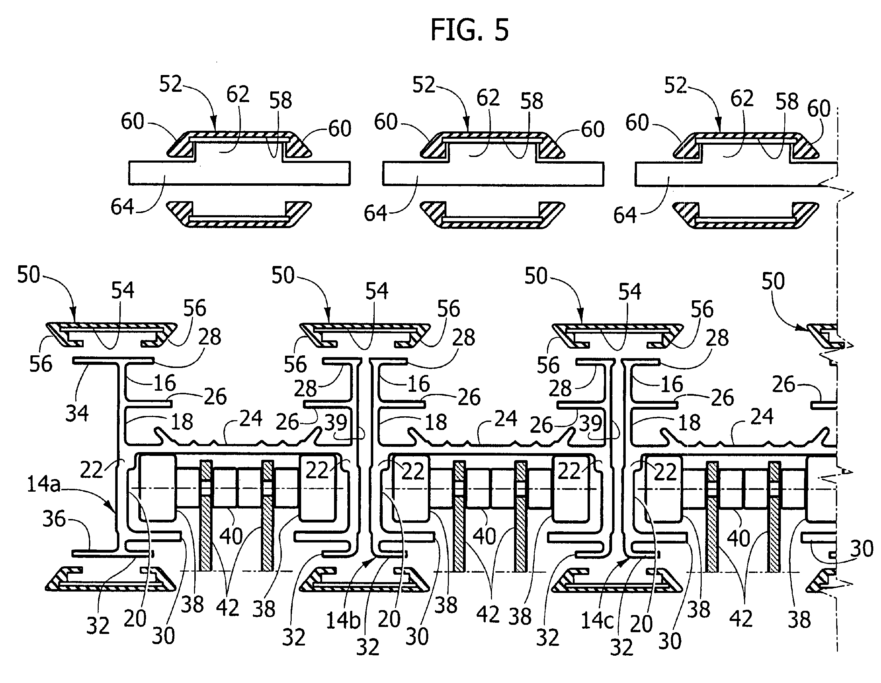

With reference in particular to Figure 5, each slat 14a, 14b, 14c is formed by a metal sectional element, for example made of aluminium or its alloys, obtained by means of extrusion, forming or the like. In cross section, each slat 14a, 14b, 14c has three longitudinal seats designated by 16, 18 and 20. Each slat 14a, 14b, 14c has two outer sides 22 joined to one another by a transverse wall 24 that divides the seats 18 and 20 from one another. The seats 16, 18 are separated from one another by two ribbings 26 that extend towards the inside from the respective sides 22. The seat 16 is delimited on the outer side of the respective slat by two ribbings 28 that extend towards the inside from the top ends of the sides 22. The seats 16, 18 are both open on the top side of the respective slat 14a, 14b, 14c, whilst the seat 20 is open on the bottom side of the slat. The seat 20 is delimited at the bottom by two ribbings 30 that extend towards the inside from the sides 22. Two further ribbings 32 are set parallel and underneath the ribbings 30.

All the slats 14a, 14b, 14c are identical to one another, with the exception of the two slats located at the side ends of the moving floor. With reference to Figure 5, the slat 14a located at one end of the moving floor 10 has two further ribbings 34, 36 that prolong the ribbings 28 and 32 towards the outside of the side 22 facing towards the outside of the moving floor 10. As regards the shape of the seats 16, 18, 20, the end slats are identical to the inner slats of the moving floor. Provided between each pair of adjacent slats is a free space 39, which allows freedom of relative movement of the slats in a longitudinal direction. The free space 39 is defined by a clearance of a few millimetres between the facing sides 22 of each pair of adjacent slats.

With reference to Figures 2 and 5, the guide 20 of each slat 14a, 14b, 14c is engaged by a plurality of pairs of rollers 38. Each pair of rollers 38 is fitted on a pin 40 that can turn about a transverse horizontal axis with respect to the direction of movement A of the slats 14a, 14b, 14c. The pins 40 bearing the pairs of rollers 38 are carried in a rotatable way by respective walls 42 fixed to the cross-members 12.

As is illustrated in Figure 2, the pairs of rollers 38 are grouped together in parallel arrays, and each array comprises a plurality of pairs of rollers 38 aligned to one another in a longitudinal direction. Each slat 14a, 14b, 14c is associated to a respective array of pairs of rollers 38 and is free to slide in the longitudinal direction A.

The slats 14a, 14b, 14c are associated to an actuation device (not illustrated) that drives a four-step operating cycle. In a first step, the first, second, and third sets of slats 14a, 14b, 14c move together by one pitch in a first direction. In a second step, the first set of slats 14a displaces by the same pitch in a second direction opposite to the first, whilst the remaining sets of slats 14b, 14c remain stationary. In a third step, the second set of slats 14b displaces by one pitch in the second direction whilst the first set of slats 14a and the third set of slats 14c remain stationary. In the fourth and last step of the cycle, the third set of slats 14c displaces by one pitch in the second direction, whilst the first set of slats 14a and the second set of slats 14b remain stationary. The actuation device that governs this operating cycle can be made as described in a simultaneous patent application filed in the name of the present applicant. Alternatively, there could be used an actuation device with three hydraulic cylinders, each of which is associated to a respective set of slats, and with a drive assembly that actuates the hydraulic cylinders according to a sequence corresponding to the four-step cycle described previously. The characteristics of construction of the actuation device fall outside the scope of the present invention and are not described in detail so as not to render the present description too laborious. For the purposes of the present invention, it is sufficient to note that, in operation, the sets of slats move according to the four-step operating cycle described previously.

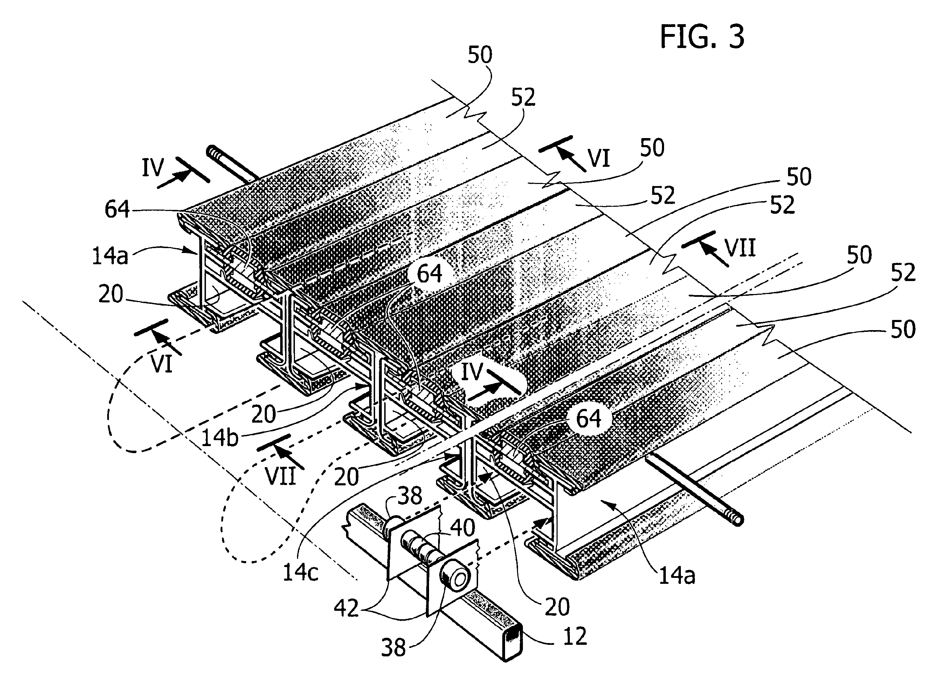

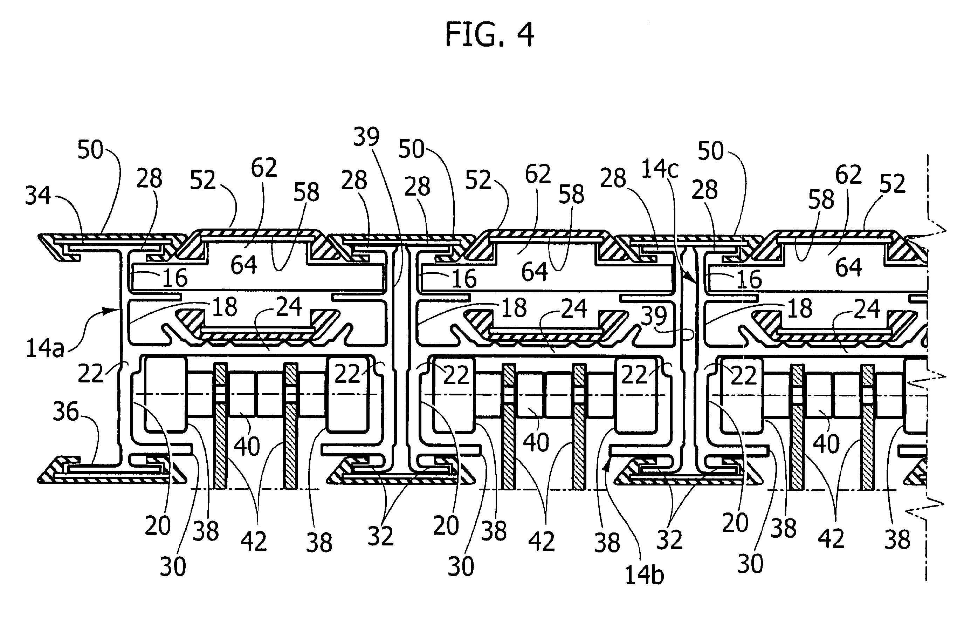

The moving floor 10 according to the present invention comprises a plurality of belts that cover the slats 14a, 14b, 14c and that form the resting floor of the moving floor. With reference in particular to Figures 3 and 4, the moving floor 10 comprises a plurality of first belts 50 and a plurality of second belts 52. The first belts 50 and the second belts 52 are closed in an endless loop and have respective top stretches and respective bottom stretches. The top stretches of the first belts 50 and of the second belts 52 are arranged in contact with one another in alternating positions and form the resting floor for the load. The first belts 50 are all identical to one another, and the second belts 52 are all identical to one another and have a shape different from that of the first belts 50.

Each first belt 50 has a guide groove 54 with undercut cross section and two inclined sides 56.

Each first belt 50 engages with a groove 54 the two ribbings 28 of two adjacent slats 14a, 14b, 14c straddling the space 39 between each pair of adjacent slats. The two belts 50 located at the side ends of the moving floor engage instead the ribbings 28, 34 of the outer side 22 of the end slat. The bottom branch of each first belt 50 engages, with the groove 54, the two ribbings 32 of a pair of adjacent slats 14a, 14b, 14c. The bottom branches of the two end belts engage the ribbings 32, 36 of the outer side 22 of the end slat.

Each of the second belts 52 has a guide seat 58 and two inclined sides 60 with an inclination complementary with respect to that of the sides 56 of the first belts 50. The top branch of each second belt 52 engages, with the seat 58, a longitudinal ribbing 62 of a supporting element 64 made of rigid material, such as for example plastic or else wood conglomerate. Each supporting element 64 engages the seat 16 of a respective slat 14a, 14b, 14c. The bottom branch of each second belt 52 is housed within the seat 18 of the respective slat 14a, 14b, 14c and rests on longitudinal reliefs that project from the top floor of the wall 24.

As may be seen in Figure 4, in the assembled condition, the sides 56, 60 of the top stretches of the first and second belts 50, 52 are in contact with one another so as to form a continuous floor for resting of loads.

With reference to Figures 1 and 2, the moving floor 10 comprises two transverse entraining shafts 66 located at the opposite ends of the bed of slats 14a, 14b, 14c. The entraining shafts 66 can turn about respective axes parallel to one another. Each one of the entraining shafts 66 is associated a deflector shaft 68, which is free to turn about an axis parallel to the axis of the respective entraining shaft 66. The entraining shafts 66 and the deflector shafts 68 are carried by the base stationary structure of the moving floor 10.

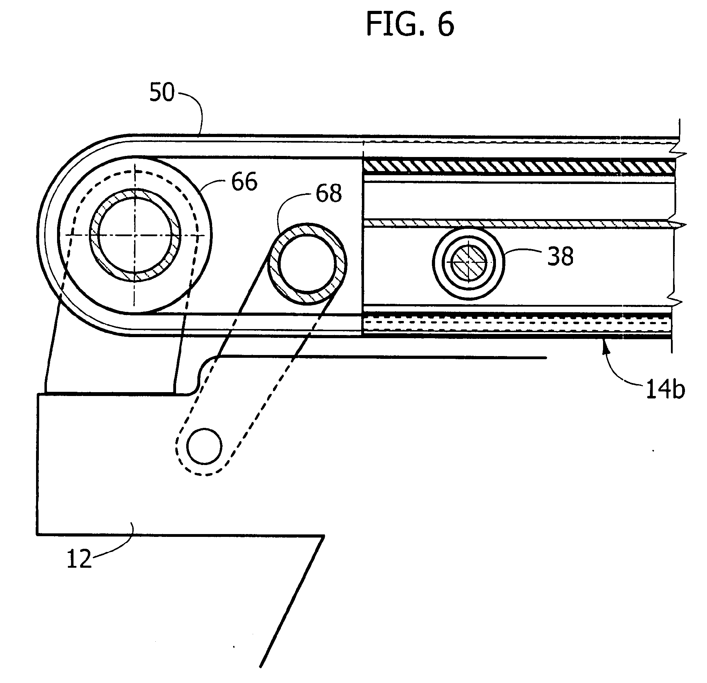

With reference to Figure 6, the first belts 50 are entrained over each entraining shaft 66. The stretch of the belts 50 that is wound on the entraining shaft 66 connects the top stretch and the bottom stretch of each first belt 50 to one another.

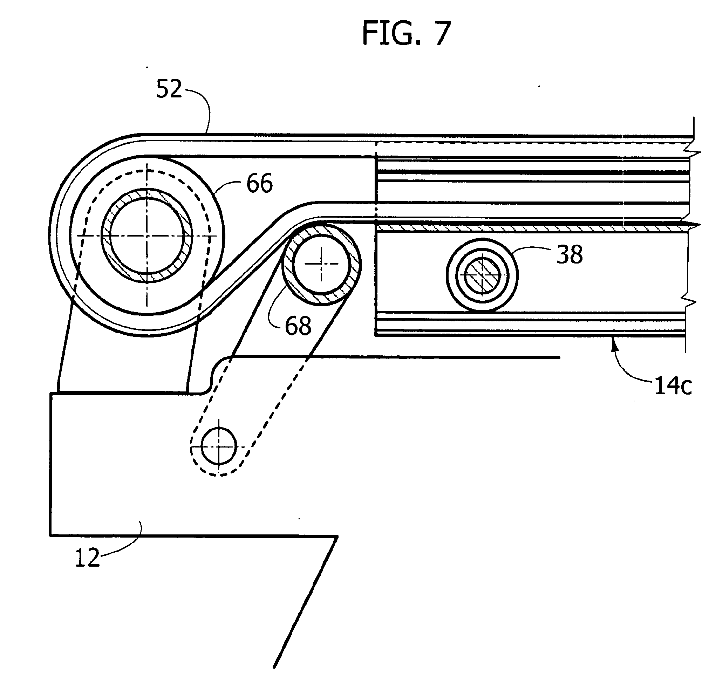

With reference to Figure 7, the second belts 52 are wound on each entraining shaft 66 and on each deflector shaft 68. The deflector shaft 68 displaces upwards the stretch of the belts 52 comprised between the entraining roller 66 and the front ends of the slats 14a, 14b, 14c and guide the belts towards the respective second seats 18 of the slats 14a, 14b, 14c.

With reference to Figures 1 and 2, the entraining shafts 66 are preferably connected to a mechanism that drives the entraining shafts 66 in step-by-step rotation in a way co-ordinated with the movement of advance of the slats 14a, 14b, 14c. The mechanism of actuation illustrated by way of example in the figures comprises a pawl-and-ratchet mechanism 70, connected to an arm 72, which is in turn connected to the slat 14a, located at the side end of the moving floor 10. The movement of advance of the slats, via the pawl-and-ratchet mechanism 70, causes the step-by-step rotation of both of the entraining shafts 66 in the same direction when the slats move together by one pitch in the aforesaid first direction (step 1).

In operation, when all the slats 14a, 14b, 14c move together by one pitch in the first direction, all the belts 50, 52 move by one pitch in the same direction. When one of the sets of slats 14a, 14b, 14c moves by one pitch in the opposite direction, all the belts 50, 52 remain stationary. In fact, the forces of friction that develop between the sides in contact with one another of the belts 50, 52 withholds in a stationary position the belts 50, 52 associated to the set of slats that moves by one pitch in the second direction.

Only when all the slats move together is the joint advance of all the belts 50, 52 obtained. The result is that the movement in four steps of the slats 14a, 14b, 14c produces a step-by-step advance of the mat of belts 50, 52. In particular, an advance by one pitch of the mat of belts is obtained in the first step of the cycle (the step in which all the slats move together by one pitch) whilst the mat of belts remains stationary in the remaining three steps of the cycle.

The mat formed by the belts 50, 52 isolates the slats 14a, 14b, 14c from the load in a particularly effective way. The moving floor according to the present invention enables handling of the goods located on the loading floor without any rolling and without any change of position of the product with respect to the resting floor. This enables prevention of the risk of damage to the products due to rolling, impact, or abrasion. The mat of belts 50, 52 prevents the contact of the products conveyed with the mechanical moving members. This moving floor consequently proves particularly indicated for conveying abrasive materials, such as for example salt or sand.

The moving floor according to the invention is suitable for transferring a wide range of materials, both packaged and bulk. In particular, the moving floor according to the invention finds application for the movement of problematical materials, such as for example manure, mineral salts, refuse, etc., which create considerable problems for moving floors of the currently commercially available type. The mat of belts according to the present invention can be easily washed and is particularly sturdy and resistant.

## Claims

1. Moving floor for supporting and conveying loads, comprising:
- a stationary base structure (12); and
- a plurality of slats (14a, 14b, 14c) grouped together in a first set, a second set, and a third set, said sets of slats being mobile in a longitudinal direction (A) according to a four-step operating cycle, in which, in a first step, the first, second and third sets of slats (14a, 14b, 14c) move together by one pitch in a first direction and in which, in the second, third, and fourth steps cyclically each set of slats moves by one pitch in a second direction opposite to the first direction, whilst the remaining two sets of slats remain stationary,
**characterized in that** it comprises a plurality of belts (50, 52) closed in an endless loop and extending in a longitudinal direction, in which said belts (50, 52) have respective top stretches arranged with the respective longitudinal sides (56, 58) in contact with one another so as to form a mat that covers said slats (14a, 14b, 14c).

2. Moving floor according to Claim 1, **characterized in that** it comprises a plurality of first belts (50) that are identical to one another and a plurality of second belts (52) that are identical to one another and different from said first belts (50), the longitudinal sides (56, 60) of the first and second belts (50, 52) being inclined and complementary with respect to one another.

3. Moving floor according to Claim 1 or Claim 2, **characterized in that** said first belts (50) extend astride of the space (39) existing between each pair of adjacent slats (14a, 14b, 14c).

4. Moving floor according to Claim 3, **characterized in that** each of said second belts (52) has a top stretch that extends between the top stretches of two first adjacent belts (50).

5. Moving floor according to any one of the preceding claims, **characterized in that** said belts (50, 52) co-operate with two transverse entraining shafts (66) located on opposite sides of said slats (14a, 14b, 14c).

6. Moving floor according to Claim 5, **characterized in that** said second belts (52) moreover co-operate with two deflector shafts (68).

7. Moving floor according to any one of the preceding claims, **characterized in that** each of said slats (14a, 14b, 14c) has a cross section with three longitudinal guide seats (16, 18, 20).

8. Moving floor according to Claim 7, **characterized in that** a first seat (16) and a second seat (18) of each slat (14a, 14b, 14c) receive, respectively, the top stretch and the bottom stretch of a respective second belt (52).

9. Moving floor according to Claim 8, **characterized in that** the third seat (20) functions as slide guide for idle rollers (38) carried by said stationary base structure (12).

## Patentansprüche

1. Schiebeboden zum Tragen und Fördern von Lasten, aufweisend:
- einen stationären Basisrahmen (12),
- mehrere Lamellen (14a, 14b, 14c), die zusammen zu einem ersten Satz, einem zweiten Satz, und einem dritten Satz gruppiert sind, wobei die Sätze von Lamellen in einer Längsrichtung (A) gemäß einem vierstufigen Betriebszyklus beweglich sind, bei dem sich in einem ersten Schritt der erste, der zweite, und der dritte Satz von Lamellen (14a, 14b, 14c) zusammen um eine Schrittlänge in einer ersten Richtung bewegen, und bei dem sich in dem zweiten, dritten und vierten Schritt zyklisch jeder Satz von Lamellen um eine Schrittlänge in einer zweiten Richtung entgegengesetzt zur ersten Richtung bewegt während die verbleibenden beiden Sätze von Lamellen stationär bleiben,
**dadurch gekennzeichnet, dass**
er mehrere Bänder (50, 52) aufweist, die in einer Endlosschleife geschlossen sind und die sich in einer Längsrichtung erstrecken, wobei die Bänder (50, 52) jeweilige obere Abschnitte haben, die mit den jeweiligen Längsseiten (56, 58) miteinander in Berührung stehend angeordnet sind, um eine Matte zu bilden, welche die Lamellen (14a, 14b, 14c) bedeckt.

2. Schiebeboden nach Anspruch 1,
**dadurch gekennzeichnet, dass**
er mehrere erste Bänder (50), die identisch miteinander sind, und mehrere zweite Bänder (52), die identisch miteinander und von den ersten Bändern (50) verschieden sind, aufweist, wobei die Längsseiten (56, 60) der ersten und der zweiten Bänder (50, 52) schräg verlaufen und komplementär zueinander sind.

3. Schiebeboden nach Anspruch 1 oder 2,
**dadurch gekennzeichnet, dass**
sich die ersten Bänder (50) über den Zwischenraum (39), der zwischen jedem Paar benachbarter Lamellen (14a, 14b, 14c) vorhanden ist, erstrecken.

4. Schiebeboden nach Anspruch 3,
**dadurch gekennzeichnet, dass**
jedes der zweiten Bänder (52) einen oberen Abschnitt hat, der sich zwischen den oberen Abschnitten von zwei ersten benachbarten Bändern (50) erstreckt.

5. Schiebeboden nach einem der vorhergehenden Ansprüche,
**dadurch gekennzeichnet, dass**
die Bänder (50, 52) mit zwei quer verlaufenden Mitnehmerwellen (66), die sich an gegenüberliegenden Seiten der Lamellen (14a, 14b, 14c) befinden, zusammenarbeiten.

6. Schiebeboden nach Anspruch 5,
**dadurch gekennzeichnet, dass**
die zweiten Bänder (52) darüber hinaus mit zwei Umlenkrollen (68) zusammenarbeiten.

7. Schiebeboden nach einem der vorhergehenden Ansprüche,
**dadurch gekennzeichnet, dass**
jede der Lamellen (14a, 14b, 14c) einen Querschnitt mit drei Längsführungssitzen (16, 18, 20) aufweist.

8. Schiebeboden nach Anspruch 7,
**dadurch gekennzeichnet, dass**
ein erster Sitz (16) und ein zweiter Sitz (18) einer jeden Lamelle (14a, 14b, 14c) jeweils den oberen Abschnitt und den unteren Abschnitt des jeweiligen zweiten Bandes (52) aufnehmen.

9. Schiebeboden nach Anspruch 8,
**dadurch gekennzeichnet, dass**
der dritte Sitz (20) als eine Gleitführung für leer laufende Rollen (38), die von dem stationären Basisrahmen (12) getragen werden, fungiert.

## Revendications

1. Tapis roulant pour supporter et transporter des charges, comprenant :
- une structure de base fixe (12) ; et
- une pluralité de lamelles (14a, 14b, 14c) regroupées en un premier ensemble, un deuxième ensemble et un troisième ensemble, lesdits ensembles de lamelles étant mobiles dans une direction longitudinale (A) selon un cycle de fonctionnement en quatre étapes, dans lequel, dans une première étape, les premier, deuxième et troisième ensembles de lamelles (14a, 14b, 14c) se déplacent ensemble d'un pas dans une première direction, et dans lequel, dans les deuxième, troisième et quatrième étapes, chaque ensemble de lamelles se déplace cycliquement d'un pas dans une seconde direction à l'opposé de la première direction, alors que les deux ensembles de lamelles restants restent fixes,
**caractérisé en ce qu'**il comprend une pluralité de courroies (50, 52) fermées dans une boucle sans fin et s'étendant dans une direction longitudinale, lesdites courroies (50, 52) ayant des extensions supérieures respectives agencées avec les côtés longitudinaux respectifs (56, 58) en contact les uns avec les autres afin de former un tapis qui couvre lesdites lamelles (14a, 14b, 14c).

2. Tapis roulant selon la revendication 1, **caractérisé en ce qu'**il comprend une pluralité de premières courroies (50) qui sont identiques les unes aux autres et une pluralité de secondes courroies (52) qui sont identiques les unes aux autres et différentes desdites premières courroies (50), les côtés longitudinaux (56, 60) des premières et secondes courroies (50, 52) étant inclinés et complémentaires les uns par rapport aux autres.

3. Tapis roulant selon la revendication 1 ou la revendication 2, **caractérisé en ce que** lesdites premières courroies (50) s'étendent à cheval sur l'espace (39) existant entre chaque paire de lamelles adjacentes (14a, 14b, 14c).

4. Tapis roulant selon la revendication 3, **caractérisé en ce que** chacune desdites secondes courroies (52) a une extension supérieure qui s'étend entre les extensions supérieures des deux premières courroies adjacentes (50).

5. Tapis roulant selon l'une quelconque des revendications précédentes, **caractérisé en ce que** lesdites courroies (50, 52) coopèrent avec deux axes d'entraînement transversaux (66) situés sur les côtés opposés desdites lamelles (14a, 14b, 14c).

6. Tapis roulant selon la revendication 5, **caractérisé en ce que** lesdites secondes courroies (52) coopèrent en outre avec deux axes déflecteurs (68).

7. Tapis roulant selon l'une quelconque des revendications précédentes, **caractérisé en ce que** chacune desdites lamelles (14a, 14b, 14c) a une section transversale avec trois assises de guidage longitudinales (16, 18, 20).

8. Tapis roulant selon la revendication 7, **caractérisé en ce qu'**une première assise (16) et une seconde assise (18) de chaque lamelle (14a, 14b, 14c) reçoivent, respectivement, l'extension supérieure et l'extension inférieure d'une seconde courroie respective (52).

9. Tapis roulant selon la revendication 8, **caractérisé en ce que** la troisième assise (20) sert de guide coulissant pour les rouleaux libres (38) portés par ladite structure de base fixe (12).
